# FASCICULE DE BREVET EUROPEEN

(11) **EP 0 456 546 B1**
(45) Date de publication et mention de la délivrance du brevet: **14.09.1994**
(21) Numéro de dépôt: 91401106.9
(22) Date de dépôt: 25.04.1991
(51) Int. Cl.: G01S 11/10

(54) **Récepteur d'un signal électromagnétique de fréquence nominale connue susceptible d'être affecté d'une variation inconnue, notamment par décalage Doppler**
Empfänger für bekannte Frequenz mit unbekannter Frequenzabweichung, insbesondere einer Dopplerverschiebung
Receiver for a known frequency with unknown variation especially by doppler displacement

(30) Priorité: 07.05.1990 FR 9005737
(43) Date de publication de la demande: 13.11.1991
(73) Titulaire: DASSAULT ELECTRONIQUE, F-92214 Saint-Cloud (FR)
(72) Inventeur: Geesen, Michel, F-92160 Antony (FR); Potier, Thierry, F-78310 Maurepas (FR); Souty, Patrick, F-78650 Beynes (FR); Wozniak, Daniel, F-78340 Les Clayes-sous-Bois (FR)
(74) Mandataire: Plaçais, Jean-Yves

(56) Documents cités:
- EP-A- 0 051 473
- EP-A- 0 094 837
- EP-A- 0 115 152
- US-A- 4 243 941

## Description

L'invention concerne la réception d'un signal électromagnétique de fréquence nominale connue susceptible d'être affecté d'une variation inconnue, notamment par décalage Doppler.

Elle trouve une application dans l'acquisition de la phase d'un signal électromagnétique de fréquence nominale connue susceptible d'être affecté d'une variation inconnue, notamment par décalage Doppler. Ce signal électromagnétique ainsi affecté sera appelé ci-après signal Doppler.

Plus particulièrement, l'invention s'applique au système de localisation de satellites ou de balises au sol dont le principe de localisation est basé sur la mesure du décalage Doppler des signaux reçus par un récepteur embarqué.

Généralement, ce genre de récepteur comprend:
- des moyens de réception d'un signal électromagnétique de fréquence nominale connue susceptible d'être affecté d'une variation inconnue, notamment par décalage Doppler ;
- une boucle d'asservissement propre au calage en phase sur la fréquence réelle du signal reçu.

En pratique, cette boucle comprend :
- un mélangeur d'entrée comprenant une première entrée reliée aux moyens de réception, une seconde entrée recevant un premier signal local, et une sortie;
- une chaîne de fréquence intermédiaire, opérant dans une bande étroite centrée autour d'une fréquence intermédiaire fixe, et montée entre la sortie du mélangeur d'entrée et la première entrée d'un comparateur de phase, qui reçoit sur une seconde entrée un second signal local, et possède une sortie, et
- une voie de réaction branchée entre cette sortie et la seconde entrée du mélangeur d'entrée, et comportant un filtre de boucle pilotant un oscillateur variable pour fournir le premier signal local.

En pratique, la chaîne de fréquence intermédiaire comprend un filtre passe-bande à bande étroite recevant la sortie du mélangeur d'entrée et un amplificateur à fréquence intermédiaire monté entre la sortie du filtre passe-bande et la première entrée du comparateur de phase.

Le filtre passe-bande est du second ordre pour assurer une protection contre les signaux parasites et le bruit tout en laissant passer le signal Doppler.

Or, l'asservissement est choisi au moins du troisième ordre pour obtenir une restitution exacte de la phase du signal Doppler malgré la variation de la fréquence dudit signal Doppler ( décalage Doppler ) en fonction du temps.

De plus, les paramètres du filtre de boucle sont commutables pour réduire progressivement la largeur de bande de l'asservissement et accroître le filtrage du bruit superposé au signal Doppler.

Par conséquent, les constantes de temps du filtre passe-bande s'ajoutant à celles du filtre de boucle, l'obtention d'une bonne stabilité de l'asservissement détermine un choix particulier des paramètres du filtre de boucle qui conduisent à limiter la plage d'acquisition de l'asservissement, c'est-à-dire l'écart maximal entre la fréquence réelle du signal Doppler reçu et celle d'attente de la boucle d'asservissement.

Ce problème est résolu à partir d'une boucle d'asservissement du type décrit ci-avant.

Selon la principale caractéristique de l'invention, la boucle comprend un second oscillateur variable pour fournir le second signal local, et le filtre de boucle comprend :
- une section proportionnelle commutable montée entre la sortie du comparateur de phase et l'entrée de commande du second oscillateur variable,
- une section intégrale commutable montée entre la sortie de la section proportionnelle commutable et l'entrée de commande du premier oscillateur variable, et
- des moyens de commande propres à commuter progressivement les paramètres de la section proportionnelle commutable et les paramètres de la section intégrale commutable.

Une telle construction a l'avantage de fournir une contre-réaction proportionnelle commutable qui n'est pas perturbée par les constantes de temps du filtre passe-bande. Il en résulte un accroissement de la plage d'acquisition de la boucle.

Selon un mode particulier de réalisation de l'invention, la chaîne de fréquence intermédiaire comprend :
- un filtre passe-bande à bande étroite centrée autour de la fréquence intermédiaire et comprenant une entrée reliée à la sortie du mélangeur d'entrée et une sortie,
- un amplificateur à fréquence intermédiaire comprenant une entrée reliée à la sortie du filtre passe-bande et une sortie ;
- le second oscillateur variable comprenant une sortie supplémentaire en quadrature de phase par rapport au second signal local et délivrant la fréquence intermédiaire.

Selon un mode particulier de l'invention, il est prévu un circuit de détection d'acquisition en phase comportant un comparateur de phase supplémentaire dont la première entrée est reliée à la sortie de l'amplificateur à fréquence intermédiaire, dont la seconde entrée est reliée à la sortie supplémentaire du second oscillateur variable et dont la sortie est reliée à des moyens de filtrage et des moyens comparateurs à seuil propres à délivrer un signal de détection d'acquisition en phase lorsque les signaux d'entrée du comparateur de phase sont en phase.

De préférence, chaque comparateur de phase est relié à un circuit de correction automatique de l'erreur de phase statique dudit comparateur.

Selon un autre aspect de l'invention, le récepteur est équipé d'un circuit de reconstitution de la fréquence du signal reçu comprenant un mélangeur supplémentaire dont la première entrée est reliée à la sortie du premier oscillateur variable, dont la seconde entrée est reliée à la sortie du second oscillateur variable et dont la sortie délivre la fréquence du signal reçu comportant le décalage Doppler.

En pratique, la section proportionnelle commutable comprend un premier amplificateur à gain commutable dont l'entrée est reliée à la sortie du comparateur de phase et dont la sortie est reliée à l'entrée du second oscillateur variable.

En pratique, la section intégrale commutable comprend :
- un premier intégrateur à constante de temps commutable dont l'entrée est reliée à la sortie du premier amplificateur à gain commutable;
- un second intégrateur à constante de temps commutable dont l'entrée est reliée à la sortie dudit premier intégrateur ; et
- un sommateur dont les première et seconde entrées sont reliées respectivement aux sorties des premier et second intégrateurs et dont la sortie est reliée à l'entrée du premier oscillateur variable.

Selon un aspect de l'invention, le récepteur comprend en outre un détecteur de plage d'excursion du premier oscillateur variable comprenant :
- un premier comparateur comportant une première entrée reliée à l'entrée du premier oscillateur à tension de commande variable et une seconde entrée recevant un premier signal de référence et une sortie;
- un second comparateur comportant une première entrée reliée à l'entrée du premier oscillateur à tension de commande variable et une seconde entrée recevant un second signal de référence et une sortie;
- une porte OU montée entre les sorties des premier et second comparateurs et une entrée des moyens de commande et délivrant à sa sortie un signal de détection propre à indiquer l'appartenance du signal d'entrée du premier oscillateur à la plage de fréquences définie par les premier et second signaux de référence, les moyens de commande étant propres à réinitialiser les paramètres de filtre de boucle en présence dudit signal de détection.

D'autres caractéristiques et avantages de l'invention apparaîtront à la lumière de la description détaillée ci-après, et des dessins annexés sur lesquels :
- la figure 1 illustre schématiquement un système de trajectographie ou de localisation embarqué sur un satellite utilisant un récepteur conforme à l'invention pour l'acquisition et le traitement du signal émis par une balise au sol;
- la figure 2 illustre l'environnement électronique de la boucle d'asservissement du récepteur selon l'invention;
- la figure 3 est une vue schématique de la boucle d'asservissement d'un récepteur de type connu ;
- la figure 4 est une vue schématique des éléments essentiels de la boucle d'asservissement selon l'invention;
- la figure 5 illustre schématiquement un premier exemple de commutation des paramètres de filtrage du filtre de boucle selon l'invention;
- la figure 6 illustre schématiquement un second exemple de commutation des paramètres de filtrage du filtre de boucle selon l'invention;
- la figure 7 illustre schématiquement le détecteur de plages de fréquences branché à l'entrée du premier oscillateur selon l'invention; et
- la figure 8 illustre schématiquement un circuit de correction de l'erreur de phase statique d'un comparateur de phase selon l'invention.

Les dessins annexés comportent de nombreux éléments de caractère certain. En conséquence, ils sont incorporés à la description, non seulement pour permettre de mieux comprendre celle-ci, mais aussi pour servir à la définition de l'invention, le cas échéant.

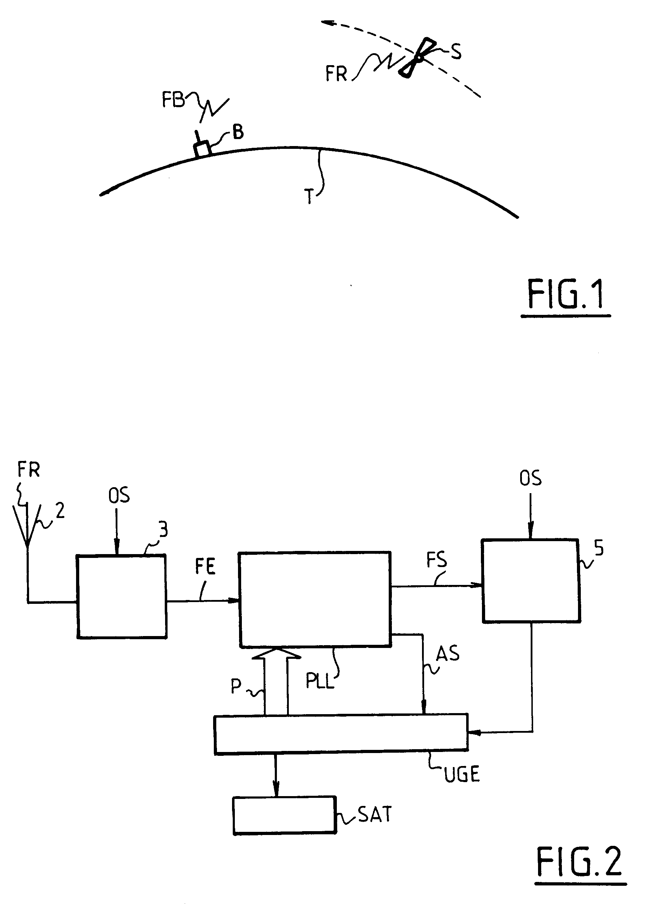

Sur la figure 1, on a représenté un système de trajectographie ou de localisation utilisant un récepteur embarqué sur un satellite pour l'acquisition et les traitements du signal émis FB par une balise B au sol T.

Le satellite S défile autour de la terre et reçoit un signal FR appelé signal Doppler résultant du signal émis FB affecté d'un décalage Doppler.

On fait maintenant référence à la figure 2.

Le signal Doppler FR reçu par l'antenne 2 du satellite est transmis, via des moyens de réception 3 après amplification et changement de fréquence, à une boucle d'asservissement de phase PLL.

A partir des caractéristiques du satellite telles que son orbite, sa vitesse ou à partir d'une analyse spectrale interne, le décalage Doppler contenu dans le signal Doppler FR peut être évalué en fonction de la position du satellite. Ainsi, une unité de gestion embarquée UGE applique à la boucle d'asservissement PLL une fréquence de prépositionnement P proche de la fréquence attendue du signal reçu FR.

La boucle d'asservissement PLL effectue une acquisition en phase sur le signal transposé FE qui est fortement bruité et souvent accompagné de signaux parasites.

L'environnement électrique de la boucle PLL comprend un oscillateur ultra-stable OS situé à bord du satellite et propre à délivrer des signaux de fréquence de l'ordre de quelques Mégahertz pour le changement en fréquence du signal reçu en amont de la boucle PLL et pour la mesure de fréquence du signal de sortie FS de la boucle PLL. Par exemple, la fréquence du signal de sortie FS est mesurée par des moyens de mesure de fréquence 5 tandis que l'unité de gestion embarquée UGE traite le résultat de cette mesure et la transmet au satellitte SAT.

Comme on le verra en détail ci-après, un signal de détection d'acquisition en phase AS, appliquée à l'unité de gestion UGE, apparaît lorsque le calage en phase de la boucle d'asservissement est établi.

En réponse au signal AS, la largeur de bande de l'asservissement est réduite progressivement par commutations successives des paramètres du filtre de boucle.

Il est à remarquer ici que le signal de sortie FS est l'image du signal Doppler FE débarassé du bruit et des signaux parasites.

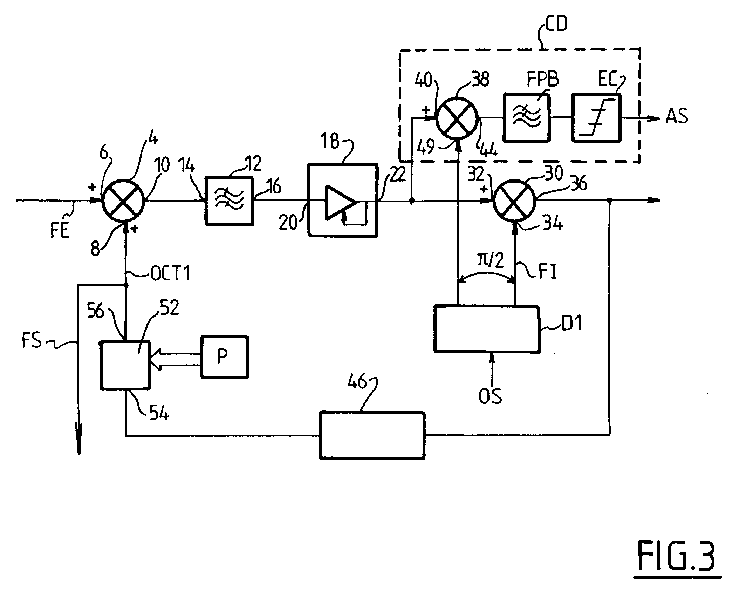

Nous faisons maintenant référence à la figure 3.

La boucle d'asservissement reçoit le signal Doppler FE issu des moyens de réception.

De façon connue, la boucle d'asservissement propre au calage sur la fréquence réelle du signal FE comprend un mélangeur d'entrée 4 comprenant une première entrée 6 recevant le signal Doppler FE, une seconde entrée 8 recevant un signal local OCT1, et une sortie 10.

Une chaîne de fréquence intermédiaire est montée entre la sortie 10 du mélangeur d'entrée 4 et l'entrée 32 d'un comparateur de phase 30, qui reçoit sur une seconde entrée 34 un second signal local de fréquence intermédiaire fixe FI issu de l'oscillateur ultra-stable OS.

En pratique, la chaîne de fréquence intermédiaire comprend un filtre passe-bande 12 à bande étroite centré autour de la fréquence intermédiaire fixe FI dont l'entrée 14 est reliée à la sortie 10 du mélangeur 4, et un amplificateur à fréquence intermédiaire 18 dont l'entrée 20 est reliée à la sortie 16 du filtre passe-bande 12.

L'amplificateur à fréquence intermédiaire 18 permet de compenser les variations du niveau du signal reçu FR et fixe le point de fonctionnement du comparateur de phase 30. Le faible rapport signal à bruit de la transmission entre la balise et le satellite nécessite ici l'utilisation de comparateurs à caractéristiques sinusoïdales.

Le filtre passe-bande 12 est par exemple un filtre piézo-électrique dont la fréquence centrale est par exemple de l'ordre de 3,125 Mégahertz avec une largeur de bande de l'ordre de quelques cenaines de Hertz par exemple de l'ordre de 570 Hertz. La fréquence nominale FE du signal électromagnétique est par exemple de l'ordre de 1,25 Mégahertz. L'oscillateur local OCT1 est prépositionné par exemple autour d'une fréquence centrale de l'ordre de 1,875 Mégahertz.

La détection de cohérence de phase est réalisée par un circuit de détection d'acquisition en phase CD délivrant le statut d'acquisition AS lorsque la boucle PLL est calée en phase sur la fréquence réelle du signal électromagnétique FE.

Le circuit de détection d'acquisition en phase CD comprend un comparateur de phase 38 dont la première entrée 40 est reliée à la sortie 22 de l'amplificateur à fréquence intermédiaire 20 et dont la seconde entrée 44 reçoit un signal local de fréquence intermédiaire fixe FI issu de l'oscillateur stable via un diviseur D1 propre à fournir deux signaux à la fréquence FI et déphasés l'un par rapport à l'autre. Ainsi, le signal local entrant dans le comparateur 38 est en quadrature de phase par rapport au signal de fréquence intermédiaire FI entrant dans le comparateur 30.

Lorsque les signaux d'entrée du comparateur de phase 30 sont en phase, le signal de détection d'acquisition en phase AS est délivré.

Un filtre passe-bas FPB et un comparateur à seuil EC sont branchés à la sortie 44 du comparateur 38 pour délivrer une tension continue lorsque les signaux d'entrée du comparateur 30 sont en phase.

Une voie de réaction est branchée entre la sortie 36 du comparateur de phase 30 et la seconde entrée 8 du mélangeur d'entrée 4. Cette voie de réaction comporte un filtre de boucle 46 pilotant l'oscillateur variable 52 pour fournir le premier signal local OCT1.

Le filtre de boucle 46 est du second ordre et possède des paramètres commutables par des moyens de commande (non représentés) pour réduire progressivement la largeur de boucle de l'asservissement.

Le fonctionnement du récepteur, dans le cadre d'un exemple d'application tel que la trajectographie ou la localisation de balises, est le suivant.

D'abord, l'oscillateur local OCT1 est prépositionné à titre d'exemple à une fréquence P attendue de l'ordre de 1,875 Mégahertz. Ensuite, l'amplificateur à fréquence intermédiaire 20 est régulé pour permettre la compensation des variations du niveau du signal reçu FR. Enfin, le filtre de boucle 46 en bande large est validé.

Dès l'apparition du statut de détection d'acquisition en phase AS, les paramètres de filtrage du filtre de boucle sont commutés progressivement pour passer en bande étroite.

Or, l'influence des constantes de temps du filtre passe-bande 12 du second ordre se traduit ici par la réduction de la marge de phase de l'asservissement, ce qui peut aboutir à une dégradation de la stabilité dudit asservissement. En outre, la plage d'acquisition est limitée à la bande du filtre sélectif 12.

Le Demandeur s'est posé le problème d'améliorer la structure de la boucle d'asservissement de telle sorte que les dégradations occasionnées par le filtre sélectif 12 soient atténuées.

Ce problème est résolu notamment par la subdivision du filtre de l'asservissement en deux sections dont l'une n'est pas affectée par le filtre passe-bande. En outre, il est prévu de faire intervenir un second oscillateur variable qui fournit le second signal local.

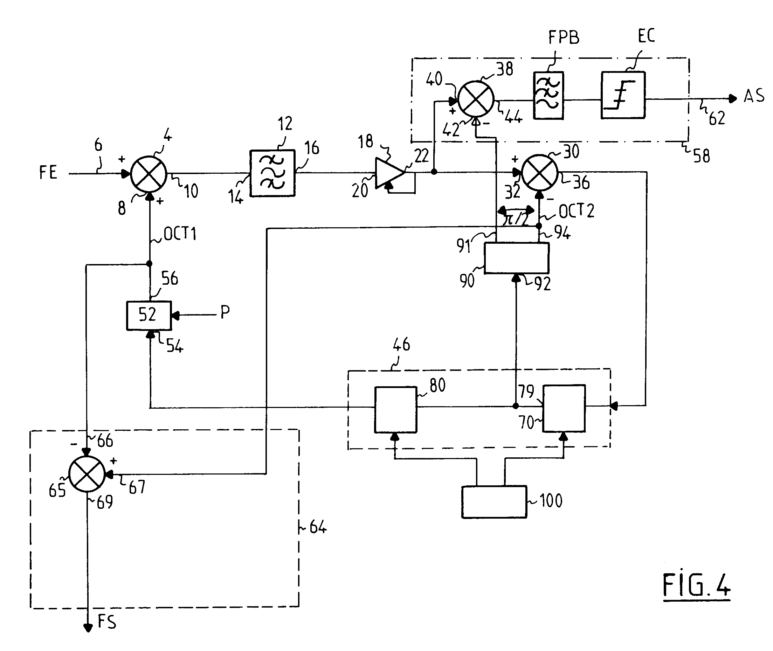

On se réfère maintenant à la figure 4. On y retrouve les éléments constitutifs du récepteur décrit en référence à la figure 3.

Selon une caractéristique très importante de l'invention, le filtre de boucle 46 est subdivisé en deux sections commutables : une section proportionnelle commutable 70 montée entre la sortie 36 du comparateur de phase 30 et l'entrée de commande 92 d'un second oscillateur variable 90 délivrant le second signal local OCT2, et une section intégrale commutable 80 montée entre la sortie 79 de la section proportionnelle commutable 70 et l'entrée de commande du premier oscillateur variable 52 délivrant le premier signal local OCT1.

Des moyens de commande 100 commutent progressivement les paramètres de la section proportionnelle commutable 70 ainsi que les paramètres de filtrage de la section intégrale commutable 80.

Comme on le verra plus en détail ci-après, l'avantage de la subdivision du filtre de boucle est que l'asservissement constitué par la section proportionnelle commutable commandant le second oscillateur variable 90 n'est pas affectée par le filtre passe-bande 12.

Selon l'invention, il est prévu un circuit de mesure de fréquence 64 du signal de sortie FS propre à reconstituer la fréquence du signal FE. Ce circuit de mesure 64 comporte un mélangeur 65 dont la première entrée 66 est reliée à la sortie 56 de l'oscillateur local 52 et dont la seconde entrée 67 est reliée à la sortie 94 de l'oscillateur local 90. La sortie 69 du mélangeur 65 délivre le signal de sortie FS.

La boucle d'asservissement est accrochée lorsque la phase du signal FE est égale à la différence de phase entre les deux signaux locaux OCT1 et OCT2. Lorsque la boucle est accrochée, la fréquence du signal de sortie FS de la sortie 69 du mélangeur 65 est égale à la fréquence du signal FE et, par conséquent, comporte le décalage Doppler du signal reçu FR.

Il est prévu également un circuit de détection 58 sensiblement identique au circuit de détection CD décrit en référence à la figure 3.

Toutefois, ici, la seconde entrée 42 du comparateur de phase 38 est reliée à la sortie 91 en quadrature de phase de l'oscillateur local 90.

Pour le reste, la structure du circuit 58 est identique au circuit CD. De la même façon, son fonctionnement est identique à celui du circuit CD, c'est-à-dire qu'il délivre à sa sortie 62 le signal de détection AS représentatif du calage de phase de la boucle d'asservissement sur la fréquence FE.

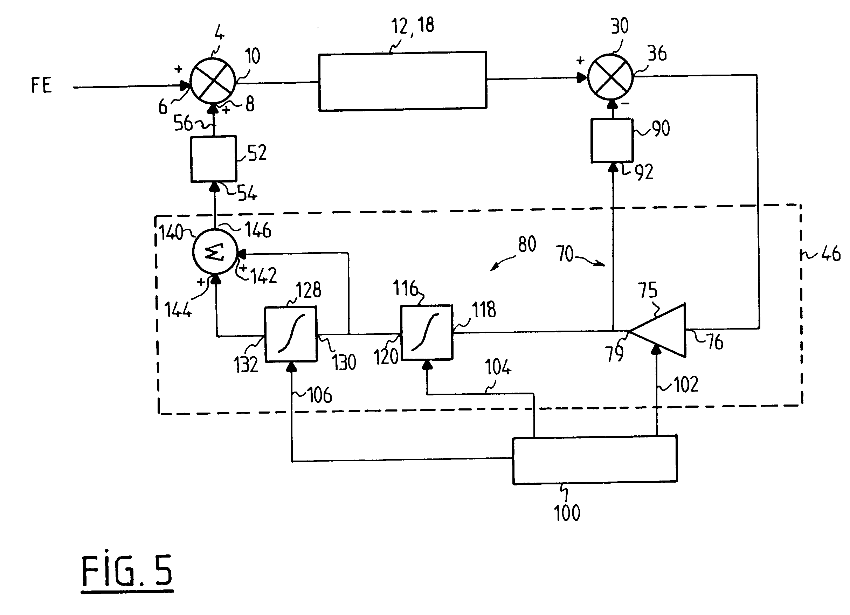

On se réfère maintenant à la figure 5 qui illustre de façon détaillée un premier mode de réalisation de la commutation des paramètres de filtrage des deux sections commutables du filtre de boucle.

On y retrouve les éléments essentiels du récepteur tel que décrit en référence à la figure 4, c'est-à-dire le mélangeur d'entrée 4, la chaîne de fréquence intermédiaire montée entre le mélangeur d'entrée 4 et le comparateur de phase 30, le filtre de boucle 46 et les oscillateurs 52 et 90.

Le filtre de boucle 46 se répartit en deux sections commutables 70 et 80.

La section proportionnelle commutable 70 comprend un amplificateur 75 à gain G1 variable dont l'entrée 76 est reliée à la sortie 36 du comparateur de phase 30 et dont la sortie 79 est reliée à l'entrée 92 du second oscillateur local 90.

Les moyens de commande 100 délivrent à la sortie 102 un signal de commande propre à commuter le gain de l'amplificateur 75 entre plusieurs valeurs.

Il y a lieu de remarquer que dans cette section proportionnelle commutable, la variation de paramètre est donnée par la variation du gain G1 de l'amplificateur à gain variable 75.

De son côté, la section intégrale commutable 80 comprend deux intégrateurs commutables 116 et 128, de structure identique, reliés l'un à l'autre en série. Chaque intégrateur possède une pluralité de constantes de temps commutables à l'aide des signaux de commande 104 et 106 issus des moyens de commande 100. Par exemple, chaque intégrateur possède cinq valeurs distinctes de constante de temps.

Il est prévu un sommateur 140 dont la première entrée 142 est reliée à la sortie 120 de l'intégrateur 116 et dont la seconde entrée 144 est reliée à la sortie 132 de l'intégrateur 128. La sortie 146 du sommateur 140 délivre une tension de commande propre à commander la tension variable de l'oscillateur local 52.

Le séquencement de la commutation du gain de l'amplificateur à gain variable et des constantes de temps des intégrateurs est le suivant.

Dès l'apparition du statut AS à la sortie du circuit de détection 58 (figure 4), les paramètres sont commutés pour passer de la bande large à la bande étroite en plusieurs étapes, par exemple cinq, dans la mesure où chaque élément commutable possède cinq valeurs distinctes.

Dans la première étape, le gain variable G1 et les constantes de temps des deux intégrateurs sont initialisés à une valeur prédéterminée correspondant à une acquisition du signal en bande large.

Dans la mesure où la section proportionnelle commutable ne comprend pas d'intégrateur, cette section est plus rapide que la section intégrale. Il en résulte que la commande du second oscillateur variable 90 intervient avant celle du premier oscillateur variable 52.

De son côté, et plus lentement dans la mesure où la section intégrale comprend deux intégrateurs, la variation de phase présente à la sortie du comparateur 36 est transmise à la commande du premier oscillateur variable 52, jusqu'à accord entre la fréquence du signal de sortie FS et la fréquence du signal FE.

La fin de cette première étape est caractérisée par l'apparition du statut d'acquisition AS.

Dans la deuxième étape jusqu'à la cinquième étape, le gain G1 et les constantes de temps des intégrateurs sont progressivement commutés pour rétrécir la largeur de bande de la boucle.

Il est recommandé d'adapter l'amplitude et l'instant des commutations pour atteindre la bande la plus étroite dans les meilleurs délais.

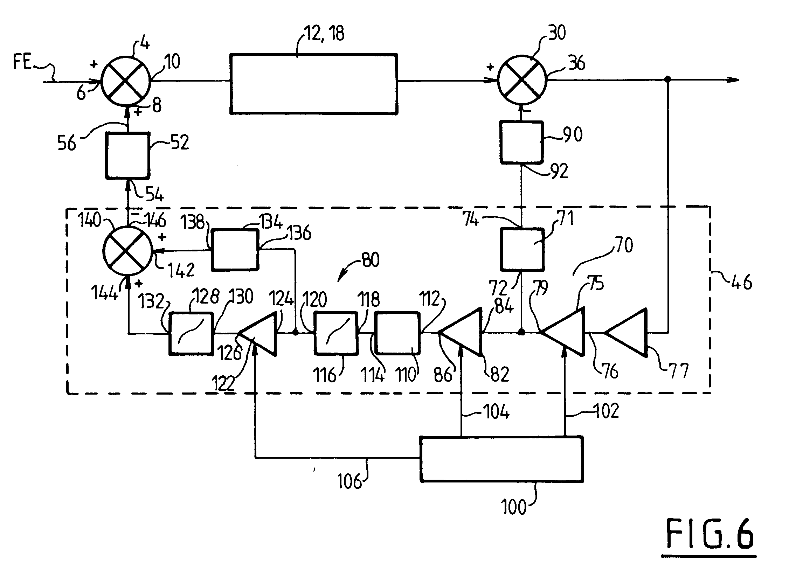

On se réfère maintenant à la figure 6 qui illustre de façon détaillée un second mode de réalisation de la commutation des paramètres de filtrage des deux sections commutables du filtre de boucle.

On y retrouve les éléments essentiels du récepteur tel que décrit en référence aux figures 4 et 5, la chaîne de fréquence de fréquence intermédiaire 12, 18 montée entre le mélangeur d'entrée 4 et le comparateur de phase 30, le filtre de boucle 46 et les deux oscillateurs 52 et 90.

Le filtre passe-bande 12 a par exemple une bande passante de l'ordre de 570 Hertz.

Le comparateur de phase 30 a, par exemple, une sensibilité de l'ordre de 141 mV/rd.

La section proportionnelle commutable 70 comprend un amplificateur 75 à gain variable G1 dont l'entrée 76 est reliée à la sortie 36 du comparateur de phase 30 et dont la sortie 79 est reliée à l'entrée 72 d'un atténuateur 71 de valeur d'atténuation fixe, par exemple de l'ordre de 0,3, qui est relié par sa sortie 74 à l'entrée du second oscillateur local 90.

De préférence, un amplificateur 77 à gain constant, par exemple de l'ordre de 13,6, est monté en amont de l'amplificateur à gain variable 75.

Les moyens de commande 100 délivrent à la sortie 102, un signal de commande propre à commuter le gain G1 entre cinq valeurs respectivement de l'ordre de 0,737 (bande large) ; 0,234 ; 0,110 ; 0,055 et 0,034 (bande étroite).

De son côté, la section intégrale commutable 80 comprend un amplificateur 82 à gain G2 commutable dont l'entrée 84 reçoit le signal de sortie 36 à travers les amplificateurs 77 et 75.

La sortie 86 de l'amplificateur 82 à gain variable est reliée à l'entrée 112 d'un atténuateur 110 de valeur d'atténuation fixe de l'ordre de 0,15.

L'entrée 118 d'un intégrateur à constante de temps prédéterminée 116 est branchée à la sortie 114 de l'atténuateur de valeur d'atténuation fixe 110.

La constante de temps de l'intégrateur 116 est par exemple de l'ordre de 14,1 millisecondes.

L'amplificateur 82 à gain G2 variable comprend une pluralité de gains commutables par l'intermédiaire d'un signal de commande 104 issu des moyens de commande 100. Par exemple, l'amplificateur 82 comprend cinq valeurs distinctes de gain G2 respectivement de l'ordre de 0,998 ; 0,308 ; 0,168 ; 0,098 ; et 0,091.

La section intégrale commutable 80 comprend en outre un autre amplificateur de gain G3 variable 122 dont l'entrée 124 est reliée à la sortie 120 de l'intégrateur 116. Un autre intégrateur à constante de temps prédéterminée 128 est branché à la sortie 126 de l'amplificateur à gain variable 122. Un autre atténuateur de valeur d'atténuation fixe 134, par exemple de l'ordre de 0,8, est relié à la sortie 120 de l'intégrateur 116.

Un sommateur 140 dont la première entrée 142 est reliée à la sortie 138 de l'atténuateur 134 et dont la seconde entrée 144 est reliée à la sortie 132 de l'intégrateur 128, délivre à sa sortie 146 une tension de commande propre à commander la tension variable de l'oscillateur local 52.

L'amplificateur 122 à gain G3 variable est commuté sous l'ordre d'un signal de commande 106 issu des moyens de commande 100. Par exemple, l'amplificateur 122 possède cinq gains G3 distincts respectivement de l'ordre de 0,940 (bande large) ; 0,504 ; 0,3 ; 0,226 ; et 0,171 (bande étroite).

La constante de temps de l'intégrateur 128 est par exemple de l'ordre de 14,1 millisecondes.

La sensibilité de l'oscillateur 90 est de l'ordre de 500 Hz/V tandis que la sensibilité de l'oscillateur 52 est de l'ordre de 5900 Hz/V.

Le séquencement de la commutation des gains des amplificateurs à gain variable est identique à celui décrit en référence à la figure 5.

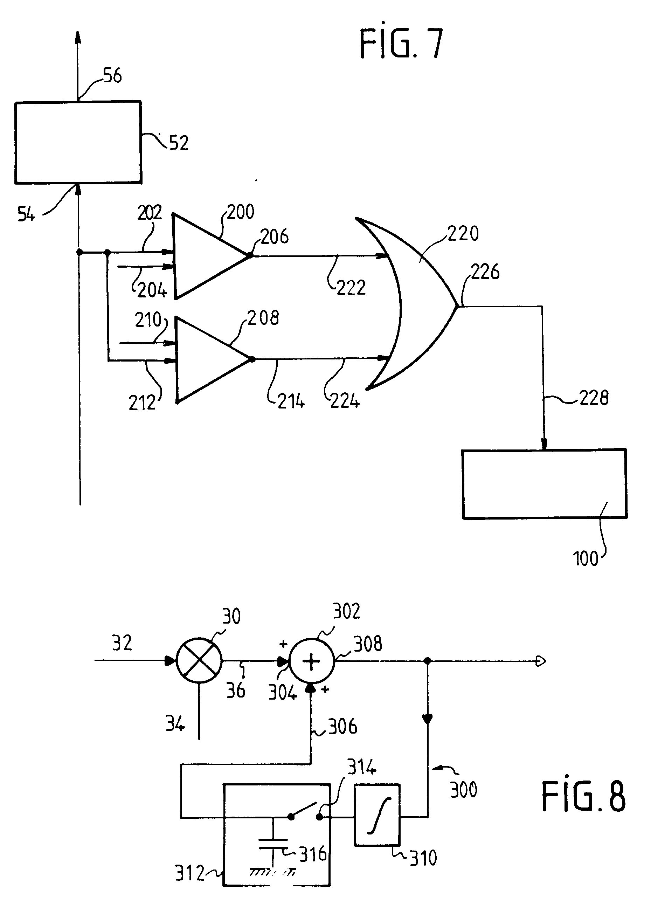

On se réfère maintenant à la figure 7 qui illustre un détecteur permettant de limiter la plage d'excursion du premier oscillateur local.

Pour limiter la plage d'excursion de l'oscillateur local 52, il est prévu de brancher à l'entrée 54 dudit oscillateur local 52 un circuit de détection de la tension de commande de l'oscillateur local 52 dans une plage de fréquences prédéterminée.

En réponse au signal délivré par le circuit de détection, les moyens de commande 100 procèdent soit à la commutation des paramètres de filtrage jusqu'au passage en bande étroite de la boucle d'asservissement dans le cas où la tension d'entrée 54 est comprise dans la plage d'excursion de l'oscillateur, soit repart à la première étape de l'acquisition lorsque la tension d'entrée n'est pas comprise dans la plage d'excursion de l'oscillateur.

Le circuit de détection comprend un comparateur 200 comportant une première entrée 202 reliée à l'entrée 54 de l'oscillateur 52 et une seconde entrée 204 recevant un premier signal de référence et une sortie 206.

Il est prévu un autre comparateur 208 dont la première entrée 210 reçoit un second signal de référence et dont la seconde entrée est reliée à l'entrée 54 de l'oscillateur 52.

La sortie 206 du comparateur 200 et la sortie 214 du comparateur 208 sont respectivement reliées aux entrées 222 et 224 d'une porte OU 220. La sortie 226 de la porte OU 220 est reliée à l'entrée 228 des moyens de commande 100.

Lorsque la tension de commande à l'entrée 54 est comprise dans la plage de fréquences délimitée par les signaux de référence 204 et 210, le signal délivré par la porte OU autorise les moyens de commande 100 à continuer l'acquisition jusqu'à l'acquisition en phase du signal FE indiqué par l'apparition du statut AS.

Par contre, lorsque la tension de commande de l'oscillateur 52 sort de la plage définie par les deux signaux de référence, le signal délivré par la porte OU incite les moyens de commande 100 à revenir au début de la première étape 1 décrite ci-avant.

Il est prévu également un dispositif de correction automatique de la tension de décalage du comparateur de phase 30. Ce dispositif correcteur permet de s'affranchir des erreurs techniques dues aux composants, notamment du comparateur de phase 30.

On se réfère maintenant à la figure 8.

Le dispositif de correction 300 comprend une boucle de réaction comprenant un sommateur 302 dont la première entrée est reliée à la sortie 36 du comparateur de phase 30 et dont la sortie 308 est reliée à un intégrateur 310.

Un échantillonneur-bloqueur 312, constitué par exemple d'un condensateur 316 et d'un interrupteur 314, est monté entre la sortie de l'intégrateur 310 et la seconde entrée 306 du sommateur 302.

En phase d'initialisation de la boucle de phase, le signal à l'entrée 32 du comparateur 30 est coupé et l'échantillonneur-bloqueur 312 est transparent ce qui permet l'asservissement à 0 de la sortie 308 grâce à la boucle de réaction.

En phase dynamique, le signal Doppler est appliqué à l'entrée 32 du comparateur 30 et l'interrupteur 314 est ouvert afin de mémoriser la tension de correction du décalage du comparateur dans le condensateur 316.

## Revendications

1. Récepteur d'un signal électromagnétique de fréquence nominale connue (FR), susceptible d'être affecté d'une variation inconnue, notamment par décalage Doppler et d'être accompagné de bruit et de signaux parasites, ledit récepteur comprenant :
- des moyens de réception (2, 3) dudit signal électromagnétique;
- une boucle d'asservissement propre au calage en phase sur la fréquence réelle du signal reçu, cette boucle comprenant :
. un mélangeur d'entrée (4) comprenant une première entrée (6) reliée aux moyens de réception (2,3), une seconde entrée (8) recevant un premier signal local, et une sortie (10);
. une chaîne de fréquence intermédiaire, opérant dans une bande étroite centrée autour d'une fréquence intermédiaire, et montée entre la sortie (10) du mélangeur (4) et l'entrée (32) d'un comparateur de phase (30), qui reçoit sur une seconde entrée (34) un second signal local, et possède une sortie (36), et
. une voie de réaction branchée entre cette sortie (36) et la seconde entrée (8) du mélangeur d'entrée (4), et comportant un filtre de boucle (46) pilotant un oscillateur variable (52) pour fournir ledit premier signal local,
. le filtre de boucle (46) étant au moins du second ordre et possédant des paramètres de filtrage commutables pour réduire progressivement la largeur de bande de l'asservissement de phase et accroître le filtrage desdits bruit et signaux parasites,
caractérisé en ce que la bouche comprend un second oscillateur variable (90) pour fournir ledit second signal local, et en ce que le filtre de bouche (46) comprend :
- une section proportionnelle commutable (70) montée entre ladite sortie (36) et l'entrée de commande (92) du second oscillateur variable (90),
- une section intégrale commutable (80) montée entre la sortie (79) de la section proportionnelle commutable (70) et l'entrée de commande (54) du premier oscillateur variable (52), et
- des moyens de commande (100) propres à commuter progressivement les paramètres de la section proportionnelle commutable (70) ainsi que les paramètres de filtrage de la section intégrale commutable (80).

2. Récepteur selon la revendication 1, caractérisé en ce que la chaîne de fréquence intermédiaire comprend :
- un filtre passe-bande (12) à bande étroite centrée autour de la fréquence intermédiaire et comprenant une entrée (14) reliée à la sortie (10) du mélangeur (4) et une sortie (16);
- un amplificateur à fréquence intermédiaire (18) comprenant une entrée (20) reliée à la sortie (16) du filtre passebande (12) et une sortie (22) ; et
- le second oscillateur variable (90) comprenant une sortie supplémentaire (91) délivrant la fréquence intermédiaire en quadrature de phase par rapport au second signal local.

3. Récepteur selon la revendication 2, caractérisé en ce qu'il comprend un circuit de détection d'acquisition en phase (58) comportant un comparateur de phase supplémentaire (38) dont la première entrée (40) est reliée à la sortie (22) de l'amplificateur à fréquence intermédiaire (20), dont la seconde entrée (42) est reliée à la sortie supplémentaire (91) du second oscillateur variable (90) et dont la sortie (44) est reliée à des moyens de filtrage et des moyens comparateurs à seuil propres à délivrer un signal de détection d'acquisition en phase lorsque les signaux d'entrée du comparateur de phase (30) sont en phase.

4. Récepteur selon l'une quelconque des précédentes revendications, caractérisé en ce qu'il comprend un circuit de reconstitution (64) de la fréquence du signal reçu comprenant un mélangeur supplémentaire (65) dont la première entrée (66) est reliée à la sortie (56) du premier oscillateur variable (52), dont la seconde entrée (67) est reliée à la sortie (94) du second oscillateur variable (90) et dont la sortie (69) délivre la fréquence du signal reçu comportant le décalage Doppler.

5. Récepteur selon l'une quelconque des précédentes revendications, caractérisé en ce que la section proportionnelle commutable (70) comprend un premier amplificateur à gain commutable (75) dont l'entrée (76) est reliée à la sortie (36) du comparateur de phase (30) et dont la sortie (79) est reliée à l'entrée (92) du second oscillateur variable (90).

6. Récepteur selon l'une quelconque des précédentes revendications, caractérisé en ce que la section intégrale commutable (80) comprend :
- un premier intégrateur (116) à constante de temps commutable dont l'entrée (118) est reliée à la sortie (79) du premier amplificateur à gain commutable;
- un second intégrateur à constante de temps commutable (128) dont l'entrée (130) est reliée à la sortie (120) du premier intégrateur (116) ; et
- un sommateur dont les première et seconde entrées sont reliées respectivement aux sorties (120 et 132) des premier et second intégrateurs et dont la sortie est reliée à l'entrée du premier oscillateur variable.

7. Récepteur selon l'une quelconque des précédentes revendications, caractérisé en ce que chaque comparateur de phase comprend un circuit de correction automatique (300) de l'erreur de phase statique dudit comparateur.

8. Récepteur selon l'une quelconque des précédentes revendications, caractérisé en ce qu'il comprend un détecteur de plage d'excursion du premier oscillateur variable (52) comprenant :
- un premier comparateur (200) comportant une première entrée (202) reliée à l'entrée (54) du premier oscillateur (52) à tension de commande variable et une seconde entrée (204) recevant un premier signal de référence et une sortie (206);
- un second comparateur (208) comportant une première entrée (212) reliée à l'entrée (54) du premier oscillateur (52) à tension de commande variable et une seconde entrée (210) recevant un second signal de référence et une sortie (214) ; et
- une porte OU (220) montée entre les sorties (206, 214) des premier et second comparateurs (200 et 208) délivrant à sa sortie (226) un signal propre à indiquer l'appartenance du signal d'entrée du premier oscillateur variable à la plage de fréquences définie par les premier et second signaux de référence, les moyens de commande (100) étant propres à réinitialiser les paramètres de filtre de boucle en présence dudit signal de détection.

## Claims

1. Receiver for an electromagnetic signal of known nominal frequency (FR), capable of undergoing an unknown variation, especially by doppler shift, and of being accompanied by noise and parasitic signals, said receiver comprising:
- reception means (2, 3) for said electromagnetic signal;
- a control loop proper to the in-phase setting to the real frequency of the received signal, this loop comprising:
. an input mixer (4) comprising a first input (6) connected to the reception means (2, 3), a second input (8) receiving a first local signal, and an output (10);
. an intermediate frequency chain, operating in a narrow band centred about an intermediate frequency and mounted between the output (10) of the mixer (4) and the input (32) of a phase comparator (30), which receives at a second input (34) a second local signal and which possesses an output (36), and
. a feedback channel connected to this output (36) and the second input (8) of the input mixer (4) and comprising a loop filter (46) driving a variable frequency oscillator (52) for supplying said first local signal,
. the loop filter (46) being at least of the second order and having filtering parameters that can be varied for progressively reducing the band width of the phase control and increasing the filtering of said noise and parasitic signals,
characterized in that the loop comprises a second variable frequency oscillator (90) for supplying said second local signal, and in that the loop filter (46) comprises:
- a variable proportional section (70) mounted between said output (36) and the control input (92) of the second variable frequency oscillator (90),
- a variable integral section (80) mounted between the output (79) of the variable proportional section (70) and the control input (54) of the first variable frequency oscillator (52), and
- control means (100) proper for progressively varying the parameters of the variable proportional section (70) and also the filtering parameters of the variable integral section (80).

2. Receiver according to Claim 1, characterized in that the intermediate frequency chain comprises:
- a narrow band bandpass filter (12) centred about the intermediate frequency and comprising an input (14) connected to the output (10) of the mixer (4) and an output (16);
- an intermediate frequency amplifier (18) comprising an input (20) connected to the output (16) of the bandpass filter (12) and an output (22); and
- the second variable frequency oscillator (90) comprising a supplementary output (91) supplying the intermediate frequency in phase quadrature with respect to the second local signal.

3. Receiver according to Claim 2, characterized in that it comprises an in-phase acquisition detection circuit (58), comprising a supplementary phase comparator (38), of which the first input (40) is connected to the output (22) of the intermediate frequency amplifier (20), of which the second input (42) is connected to the supplementary output (91) of the second variable frequency oscillator (90) and of which the output (44) is connected to filtering means and threshold comparator means adapted for supplying an in-phase acquisition detection signal when the input signals of the phase comparator (30) are in phase.

4. Receiver according to any one of the preceding Claims, characterized in that it comprises a recovery circuit (64) for the frequency of the received signal, comprising a supplementary mixer (65), of which the first input (66) is connected to the output (56) of the first variable frequency oscillator (52), of which the second input (67) is connected to the output (94) of the second variable frequency oscillator (90) and the output (69) of which supplies the frequency of the received signal containing the doppler shift.

5. Receiver according to any one of the preceding Claims, characterized in that the variable proportional section (70) comprises a first variable gain amplifier (75), the input (76) of which is connected to the output (36) of the phase comparator (30) and the output (79) of which is connected to the input (92) of the second variable frequency oscillator (90).

6. Receiver according to any one of the preceding Claims, characterized in that the variable integral section (80) comprises:
- a first integrator (116) with variable response time, the input (118) of which is connected to the output (79) of the first variable gain amplifier;
- a second integrator with variable response time (128), the input (130) of which is connected to the output (120) of the first integrator (116); and
- an adder, the first and second inputs of which are connected respectively to the outputs (120 and 132) of the first and second integrators, and the output of which is connected to the input of the first variable frequency oscillator.

7. Receiver according to any one of the preceding Claims, characterized in that each phase comparator comprises an automatic correction circuit (300) for the static phase error of said comparator.

8. Receiver according to any one of the preceding Claims, characterized in that it comprises a frequency swing range detector for the first variable frequency oscillator (52) comprising:
- a first comparator (200) containg a first input (202) connected to the input (54) of the first oscillator (52) with variable control voltage and a second input (204) receiving a first reference signal, and an output (206);
- a second comparator (208) containing a first input (212) connected to the input (54) of the first oscillator (52) with variable control voltage and a second input (210) receiving a second reference signal, and an output (214); and
- an OR gate (220) mounted between the outputs (206, 214) of the first and second comparators (200 and 208) supplying, at its output (226), a signal proper for indicating the association of the input signal of the first variable frequency oscillator with the frequency swing range defined by the first and second reference signals, the control means (100) being adapted for reinitializing the loop filter parameters in the presence of said detection signal.

## Patentansprüche

1. Empfänger eines elektromagnetischen Signals bekannter Nennfrequenz (FR), das möglicherweise beeinflußt wird von einer unbekannten Variablen, vor allem durch Dopplerverschiebung, und begleitet wird von Rauschen und Störsignalen, wobei der genannte Empfänger umfaßt:
- Empfangseinrichtungen (2, 3) des genannten elektromagnetischen Signals;
- einen Regelkreis, geeignet zur phaseneinstellung auf die tatsächliche Frequenz des empfangenen Signals, wobei dieser Kreis umfaßt:
. eine ODER-Eingangsschaltung (mélangeur d'entrée) (4), umfassend einen ersten Eingang (6), verbunden mit den Empfangseinrichtungen (2, 3), einen zweiten Eingang (8), der ein erstes lokales Signal empfängt, und einen Ausgang (10);
. eine Zwischenfrequenzkette, in einem schmalen Band wirkend, zentriert um eine Zwischenfrequenz und zwischen den Ausgang (10) der ODER-Schaltung (4) und den Eingang (32) eines Phasengenerators (30) geschaltet, der auf einem zweiten Eingang (34) ein zweites lokales Signal empfängt und einen Ausgang (36) besitzt, und
. einen Rückkopplungskanal, angeschlossen zwischen diesem Ausgang (36) und dem zweiten Eingang (8) der ODER-Eingangsschaltung (4) und ein Kreisfilter (46) enthaltend, das einen variablen Oszillator (52) steuert, um das erste lokale Signal zu liefern,
. dabei ist das Kreisfilter (46) wenigstens zweiter Ordnung und besitzt umschaltbare Filtrierparameter, um progressiv die Bandbreite der Phasenregelung zu reduzieren und die Filtrierung des Rauschens und der Störsignale zu verstärken,
dadurch **gekennzeichnet**,
daß der Kreis einen zweiten variablen Oszillator (90) enhält, um das genannte zweite lokale Signal zu liefern, und dadurch, daß das Kreisfilter (46) umfaßt:
- eine umschaltbare Proportionalsektion (70), zwischen den genannten Ausgang (36) und den Steuereingang (92) des zweiten variablen Oszillators (90) geschaltet,
- eine umschaltbare Integralsektion (80), zwischen den Ausgang (79) der umschaltbaren Proportionalsektion (70) und den Steuereingang (54) des ersten variablen Oszillators (52) geschaltet, und
- Steuereinrichtungen (100), geeignet progressiv die Parameter der umschaltbaren Proportionalsektion (70) umzuschalten, sowie die Filtrierparameter der umschaltbaren Integralsektion (80).

2. Empfänger nach Anspruch 1, dadurch gekennzeichnet, daß die Zwischenfrequenzkette umfasst:
- ein Schmalband-Bandfilter (12), zentriert um die Zwischenfrequenz, und einen Eingang (14) umfassend, der verbunden ist mit dem Ausgang (10) der ODER-Schaltung (4), und einen Ausgang (16);
- einen Zwischenfrequenzverstärker (18), umfassend einen Eingang (20), verbunden mit dem Ausgang (16) des Bandfilters (12), und einen Ausgang (22); und
- den zweiten variablen Oszillator (90), einen zusätzlichen Ausgang (91) umfassend, der die Zwischenfrequenz um 90° phasenverschoben liefert, bezogen auf das zweite lokale Signal.

3. Empfänger nach Anspruch 2, dadurch gekennzeichnet, daß er eine Phasengleichheit-Detektionsschaltung (58) umfaßt, enthaltend einen zusätzlichen Phasenkomparator (38), dessen erster Eingang (40) verbunden ist mit dem Ausgang (22) des Zwischenfrequenzverstärkers (20), dessen zweiter Eingang (42) verbunden ist mit dem zusätzlichen Ausgang (91) des zweiten variablen Oszillators (90), und dessen Ausgang (44) verbunden ist mit Filtriereinrichtungen und Komparatoreinrichtungen mit Schwelle, geeignet ein Phasengleichheit-Detektionssignal zu liefern, wenn die Eingangssignale des Phasenkomparators (30) in Phase sind.

4. Empfänger nach einem beliebigen der vorhergehenden Ansprüche, dadurch gekennzeichnet, daß er eine Wiederherstellungsschaltung (64) der Frequenz des empfangenen Signals enthält, umfassend eine zusätzliche ODER-Schaltung (65), deren erster Eingang (66) verbunden ist mit dem Ausgang (56) des ersten variablen Oszillators (52), dessen zweiter Eingang (67) verbunden ist mit dem Ausgang (94) des zweiten variablen Oszillators (90), und dessen Ausgang (69) die Frequenz des empfangenen, die Dopplerverschiebung enthaltenden Signals liefert.

5. Empfänger nach einem beliebigen der vorhergehenden Ansprüche, dadurch gekennzeichnet, daß die umschaltbare Proportionalsektion (70) einen ersten Verstärker mit umschaltbarer Verstärkung (75) umfaßt, dessen Eingang (76) verbunden ist mit dem Ausgang (36) des Phasenkomparators (30), und dessen Ausgang (79) verbunden ist mit dem Eingang (92) des zweiten variablen Oszillators (90).

6. Empfänger nach einem beliebigen der vorhergehenden Ansprüche, dadurch gekennzeichnet, daß die umschaltbare Integralsektion (80) umfaßt:
- einen ersten Integrierer (116) mit umschaltbarer Zeitkonstante, dessen Eingang (118) verbunden ist mit dem Ausgang (79) des ersten Verstärkers mit umschaltbarer Verstärkung;
- einen zweiten Integrierer mit umschaltbarer Zeitkonstante (128), dessen Eingang (130) verbunden ist mit dem Ausgang (120) des ersten Integrierers (116); und
- einen Summierverstärker, dessen Eingänge, der erste und der zweite, jeweils verbunden sind mit den Ausgängen (120 und 132) des ersten und zweiten Integrierers, und dessen Ausgang verbunden ist mit dem Eingang des ersten variablen Oszillators.

7. Empfänger nach einem beliebigen der vorhergehenden Ansprüche, dadurch gekennzeichnet, daß jeder Phasenkomparator eine automatische Korrekturschaltung (300) des statischen Phasenfehlers des genannten Komparators umfaßt.

8. Empfänger nach einem beliebigen der vorhergehenden Ansprüche, dadurch gekennzeichnet, daß er einen PhasenauswanderungsbereichDetektor des ersten variablen Oszillators (52) enthält, umfassend:
- einen ersten Komparator (200), umfassend einen ersten Eingang (202), verbunden mit dem Eingang (54) des ersten Oszillators (52) mit variabler Steuerspannung, und einen zweiten Eingang (204), der ein erstes Referenzsignal empfängt, und einen Ausgang (206);
- einen zweiten Komparator (208), umfassend einen ersten Eingang (212), verbunden mit dem Eingang (54) des ersten Oszillators (52) mit variabler Steuerspannung, und einen zweiten Eingang (210), der ein zweites Referenzsignal empfängt, und einen Ausgang (214); und
- ein ODER-Tor (220), zwischen die Ausgänge (206, 214) des ersten und zweiten Komparators (200 und 208) geschaltet, das an seinem Ausgang (226) ein Signal liefert, geeignet die Zugehörigkeit des Eingangssignals des ersten variablen Oszillators zum dem durch das erste und zweite Referenzsignal definierten Frequenzbereich anzuzeigen, wobei die Steuereinrichtungen (100) geeignet sind, die Kreisfilterparameter zu reinitialisieren bei Vorhandensein des genannten Detektionssignals.
